(19) **Europäisches Patentamt European Patent Office Office européen des brevets**

(11) **EP 1 852 350 B1**

(12) **EUROPEAN PATENT SPECIFICATION**

(45) Date of publication and mention of the grant of the patent:
**22.07.2009 Bulletin 2009/30**

(51) Int Cl.:
*B64G 1/24* (2006.01)     *B64G 1/26* (2006.01)
*B64G 1/40* (2006.01)

(21) Application number: **06290705.0**

(22) Date of filing: **03.05.2006**

(54) **Method of operating a geostationary satellite and satellite control system for implementing said method**

Verfahren zum Betreiben eines geostationären Satelliten und Satellitenkontrollsystem zum Ausführen des Verfahrens

Procédé de côntrole d'un satellite géostationnaire et système de contrôle pour satellite pour effectuer ledit procédé

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**07.11.2007 Bulletin 2007/45**

(73) Proprietor: **Eutelsat**
**75015 Paris (FR)**

(72) Inventors:
 • **Rogers, Colin**
 **EUTELSAT**
 **75015 Paris (FR)**
 • **Bellido, Eduardo**
 **EUTELSAT**
 **75015 Paris (FR)**
 • **Pattinson, Lindsay Robert**
 **EUTELSAT**
 **75015 Paris (FR)**

(74) Representative: **Delaveau, Sophie**
**Cabinet Madeuf**
**56 A, rue du Faubourg Saint-Honoré**
**75008 Paris (FR)**

(56) References cited:
**US-A- 6 024 328**

 • **RABALLAND F, MIGNON D, GONNAUD J L: "EUROSTAR 2000 Disposal on a Graveyard Orbit: Orbit Control Strategy and Operational Implementation" PROCEEDINGS OF THE FOURTH EUROPEAN CONFERENCE ON SPACE DEBRIS, 18 April 2005 (2005-04-18), - 20 April 2005 (2005-04-20) XP002402653 Darmstadt, Germany**
 • **APPAIX F, BODDAERT C, BELLIDO E, HOBBS L: "EUTELSAT 2 FM4 Spacecraft End of Life Operations and Propulsion Passivation" PROCEEDINGS OF THE FOURTH INT. SPACECRAFT PROPULSION CONFERENCE, 2 June 2004 (2004-06-02), - 4 June 2004 (2004-06-04) XP002402654 Cagliari, Italy**

**Description**

The present invention relates to a method of operating a geostationary satellite and to a satellite control system for implementing said method.

FIELD OF THE INVENTION

The present invention applies to geostationary satellites with propulsion subsystems using chemical reaction (or combustion) of a mono-propellant or a bipropellant system to perform thrust. In case of a bipropellant, it is a mix of a fuel and an oxidizer.

The present invention relates more specifically to a method of operating such satellites at the end of their lifetime in order to bring them to a disposal orbit (i.e. to re-orbit them) when they are about running out of propellant, i.e. in the absence of combustion see US 6 024 328. The present invention also relates to an appropriate satellite control system comprising the necessary subassemblies located respectively in the ground station and on board the satellite.

Absence of combustion takes place following depletion of one of the liquids of a bi-propellant system, or of the single liquid in case of a mono-propellant system. Inability to estimate precisely the amount of remaining propellant in the tanks leads satellite operators to be reluctant to perform end-of-life disposal of satellites while full thrust is still possible.

There is evidence suggesting that in some cases, operators utilise satellites until the propulsion systems show evidence of depletion, and then leave the satellites drifting in the synchronous arc. This is not compliant with the international recommendations to free the Geostationary orbit (GEO) from space debris for the future exploitation of the GEO resource. It has been the interest of EUTELSAT to be compliant with these recommendations that has led to analyse, develop and implement the present invention.

This invention covers the controlled operational means to expel remaining liquids and gases (designated herein after commonly as "residuals") from propulsion systems to the maximum benefit of end-of-life satellite disposal according to the subject-matter of claim 1. The invention opens also a door to innovative methods in satellite propulsion.

BACKGROUND OF THE INVENTION

The invention concerns any 3-axis stabilised satellite with bi-propellant or mono-propellant chemical propulsion system. The method allows the operation and re-orbiting of geostationary chemical-propelled satellites in the regimes of chemical propulsion in the presence of bubbles, liquid expulsion without chemical reaction and cold-gas exhaustion.

The concerned phases are after what is defined as the standard end of life, i.e. once one of the propulsion liquids is exhausted.

Different phases can be identified :

- Once one liquid is below a certain limit, bubbles of gas will enter the thrusters during the combustion, which impacts abruptly the initial attitude control. This phase is characterised by attitude transients, which are controlled by using other attitude control equipments on-board the satellites.
- After the bubbles transition phase starts the liquid expulsion phase (in case of bi-propellant systems), in which liquid will be expelled (oxidiser or fuel, depending on the mixture ratio or dynamic residuals).
- Once the liquid phase is completed, the cold-gas mode starts. This mode consists of expelling only gas (mostly pressurant) through the thrusters.

These three operational regimes have difficulties associated to the control of the attitude and orbit of the satellite. EUTELSAT has controlled the operations under these conditions by applying as appropriate :

- Operational regime : Monitoring the attitude and applying a low initial duty cycle (i.e. ratio between the time that the thrusters are on and off : Ton/[Ton + Toff]) to control the attitude. This duty cycle has been increased during the operations to maintain an appropriate mean thrust level.
- During all phases, monitor the tanks pressures and calculation of the duty cycle based on the remaining pressure inside the tanks and the exhaustion efficiency.
- Based on the daily orbit evolution and manoeuvre efficiency, calculation of the daily exhaustion periods during the liquid/gas to ensure that the orbital parameters evolve as planned.

DETAILED DESCRIPTION OF THE INVENTION

The Geostationary orbit (GEO) is a circular orbit with a radius of 42164.5 km from the center of the Earth. The principal characteristic of this orbit is that a satellite will rotate at the same speed as the Earth and therefore remain at a fixed position relative to the ground. It is specially adapted to a large amount of broadcast services, especially television. The population of this orbit is increasing rapidly with the consequent risk to the operations of present and future satellites.

Different international recommendations have been issued with the intention to ensure the continuation of the exploitation of this natural resource that is the geostationary orbit. These recommendations require that the satellites at the end of their lifetime are brought to a disposal orbit (re-orbit), where they cannot interfere with the operational orbit. The disposal orbit adopted by most of the recommendations comes from the IADC (Inter-Agency space debris committee):

$$\Delta H[km] = 235 + 1000 * (A_{eff}/M_{s/c})$$

where

$\Delta H$ : orbital perigee relative to geostationary altitude

$A_{eff}/M_{s/c}$ : effective cross section to Mass ratio

For most of the geostationary satellites it ranges between 250 and 300 km. For the satellites used by EUTELSAT for developing the present invention, the perigee distance is 250 km.

The orbit is raised by providing an impulse to the satellite to the West direction, which is achieved by performing thrust in the East direction (expelling liquid and/or gas in the East direction) with thruster/thrusters located on the East side of the satellite.

Most satellites in case they run out of propellant for different reasons, they are left at the geostationary orbit, constituting a major risk for other operational satellites. This risk is increased in the case of a collision, where a large amount of debris particles could cause an exponential chain of collisions with other orbiting satellites. The method subject to this patent represents a major advance in the avoidance of this type of risks and is a major advance for the continuation of the exploitation of the GEO ring, since it allows even in the absence of propellant to reorbit satellites to the distances specified by the international recommendations.

When testing the invention, one satellite has been re-orbited with an increase of the perigee by 270 km and another one with a perigee increase of 220 km. The orbit raise activities for both distances have been performed in the liquid and gas regimes, indicating the flexibility of the operational concept of the satellite, and of its resilience.

The total duration of the reorbit activities was 39 days. The reasons for the long duration of the operations are explained in the following sections.

Satellite attitude control

The term attitude applied to a satellite refers to the angular orientation in space. During the operational lifetime, and for the purpose of re-orbit operations, the satellite is normally maintained in an attitude with the satellite face carrying the communications antennas pointed to the earth, and the solar arrays perpendicular to the orbit. For normal operations, when no orbit manoeuvres are in progress, this is generally achieved using the following techniques :

- Cancellation of disturbance torques by accelerating or decelaring rotating wheels to provide an equal and opposite torque on the satellite.
- In certain cases, by maintaining a large angular momentum in the wheel system, which has the effect of making the satellite attitude less susceptible to disturbances torques acting on the orthogonal axes.
- Firing thrusters from time to time to offload angular momentum accumulated in the wheels or the satellite body.

During orbit manoeuvres however the strategy described above may not be sufficient to overcome the high disturbance torques and attitude control is then often assured by direct use of thrusters for attitude control.

Attitude and Orbit Control Thrusters

During normal operations the satellite uses a chemical propulsion system to correct the satellite orbit and for attitude control purposes as described above. One or two liquid propellants are used and a chemical reaction in the thrusters expels the consumed mass at a high velocity, imparting an impulse to the satellite. This allows a high propellant mass efficiency to be achieved. During orbit manoeuvres thrusters giving acceleration in the required direction are fired, and these and other thrusters are used by the attitude control loops to maintain the satellite Earth pointing. These control loops are designed to work supposing the thrusters are operating according to their specification, and in particular suppose that the thrusters used for orbit manoeuvres are well balanced so they do not generate a high disturbance to the satellite attitude.

Thruster operation regimes at end of life

The nominal operation of the thrusters is a chemical reaction involving the propellant(s).

Following exhaustion of one off the propellants in a bipropellant system the thrusters will operate in a regime of liquid expulsion without chemical reaction. The impulse available is greatly reduced but a significant impulse may still be generated using increased firing times.

When there is no more propellant available to the thrusters they will operate in cold gas mode. In this case the pressurant gas (usually helium) in the tanks is expelled and the thrust level is further reduced.

The transition from chemical propulsion to liquid expulsion and then cold gas operation will occur at different times for the different thrusters. There may also be gas bubbles in the pipe-work before the final end of the liquid propellant is reached. These effects may make it impossible to use the normal attitude control loops of the satellite which rely on balanced thrusters and predictable thrust levels as a bubble can cause a loss of Earth pointing attitude. Recovery from this situation may waste a considerable quantity of propellant usage and have an adverse effect on the orbit.

Finally when the tanks are at a low pressure there will be vaporisation of any liquid propellant which has not been delivered to the thrusters in liquid form but which may still represent a thrust capability.

The amount of propellant remaining in the tanks and pipe-work could be calculated from the history of thruster firings since launch, but the errors will accumulate with time so the precise date at which the chemical reaction is no longer sustained cannot be precisely determined.

In a classical strategy relying on chemical propulsion for the de-orbit phase it is necessary to start the de-orbit operations as soon as the calculated remaining propellant minus the uncertainty in the calculation is equal to the required propellant to raise the orbit. In a bi-propellant system using two propellants the margin is calculated for the first of the two liquids to be depleted, so that there remains some unusable propellant when chemical propulsion is no longer available.

According to the present invention, it is possible to make effective use of the thrust capability in each of the end of life thruster regimes: chemical reaction, liquid expulsion, cold gas and vaporised liquid.

Re-orbiting according to the present invention

As previously described the uncertainty in thrust levels available from the thrusters, and the in-balance between them, makes it difficult to maintain the normal attitude while the propellants are being depleted, and this can easily lead to a loss of Earth pointing which may not be recoverable. In order to avoid this the present invention suggests to use a strategy of very small but frequent thruster firings commanded individually from the ground control center. The attitude control is maintained using other actuators, i.e. the wheels used for angular momentum storage.

With this strategy the attitude disturbance due to the uncertain thrusters operation is maintained at a sufficiently low level so that a degradation of attitude control can be detected in time for remedial action can be taken. This is achieved by adapting the firing times for the different thrusters in order to eliminate the disturbance torque and offload angular momentum from the wheels.

As it is necessary to raise the orbit as quickly as possible in order to avoid adjacent satellites and to limit the overall time taken for the re-orbit activity, the thruster firings must be made as large as possible consistent with the above constraint. This is achieved by automating the sending of thruster firing commands from the ground so that they are automatically interrupted when

- an attitude anomaly is detected
- the wheel speeds leave their operating range
- a sustained saturated torque demand to the wheels is indicated. This is an early warning that the attitude control capability is operating at its limit.

The thrusters firings are resumed as soon as the firing parameters have been adjusted.

Initially the thrusters firings are chosen such that a sufficient rate of orbit raising is achieved in the presence of a chemical reaction, but the attitude disturbance can be tolerated in case of a temporary or permanent failure of one thrusters to provide thrust, e.g. due to a gas bubble. An on time of 200 ms every 2 minutes, with a nominal thrusters force of 7 Nm, has been used in this phase. The precise level must be matched to the attitude control loop capability of the satellite.

When it has been demonstrated that the thrusters have entered a regime of liquid expulsion without chemical reaction the on time can be increased. When no propellant is delivered in liquid form to the thrusters the on time can be increased further. At this stage a value of 6s firing on 2 thrusters every 2 minutes has been used. As the propellant tank pressure reduces the on time can be increased, for example to 20 seconds or more every 2 minutes.

Further features and advantages of the present invention will become apparent upon consideration of the following detailed description of one specific implementation thereof, especially when taken in conjunction with the accompanying drawings, wherein

Figure 1 is a schematic of the attitude control equipment of a geostationary satellite;

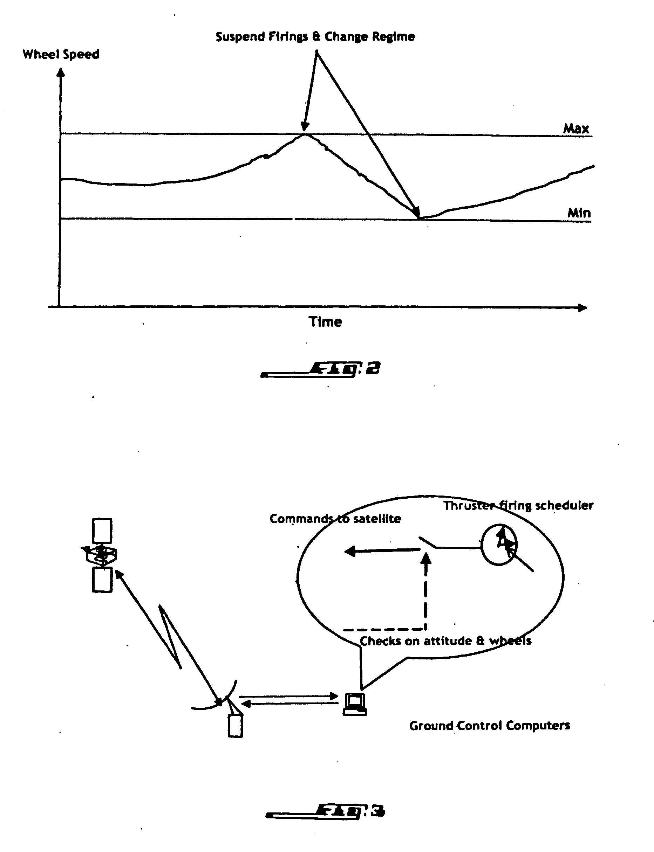

Figure 2 is a diagram showing how the wheel speed evolution over time may be used to control thruster firing commands;
Figure 3 is a schematic of how an automatic thruster firing system works;
Figure 4 is a diagram showing the increase of speed of a satellite during a re-orbiting operation;
Figure 5 is a diagram of the propellant tank pressures of a satellite propulsion system using a bipropellant propulsion system;
Figure 6 is a diagram showing the thruster pulse duration over re-orbiting time;
Figure 7 is a diagram showing the evolution of orbital parameters during re-orbiting of a satellite;
Figure 8 is a diagram showing the evolution of daily increase of the semi-major axis of the orbit during re-orbiting of a satellite.

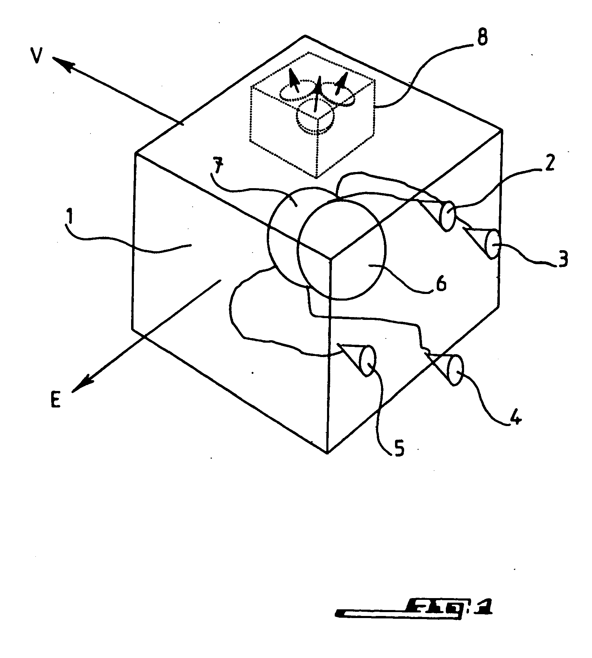

Figure 1 shows the main components of a geostationary satellite as far as they are of interest for the present invention. A satellite 1 comprises communication antennas pointed in direction E, i.e. to the earth and solar arrays oriented perpendicular to the orbit represented by the orbital velocity V. The satellite 1 further comprises a propulsion system with thrusters 2 - 5 and propellant tanks 6, 7 respectively for a fuel and an oxidizer. The satellite attitude is controlled by means of a wheel system 8.

The satellite's orbit is controlled by firing one or more thrusters according to the tracking result and the necessary correction derived therefrom.
The attitude of the satellite is controlled by acting upon the wheel system 8. Therefor, the wheels of that system have to turn at speeds varying from a predetermined minimum value to a predetermined maximum value. When the wheels have attained either the upper or the lower speed limit, then no thruster firing will be triggered until the speed is back inside the operation range.
The thruster firing is preferably controlled automatically from the satellite ground station 10 with its Ground Control Computers 11 which check the attitude of the satellite and the speed of the wheels 8. Further, the computers 11 schedule the thruster firing and generate appropriate commandes to be sent to the satellite.

An FO3 satellite has a dry mass of approximately 850 kg. There is a bi-propellant propulsion system and a single wheel for attitude control.

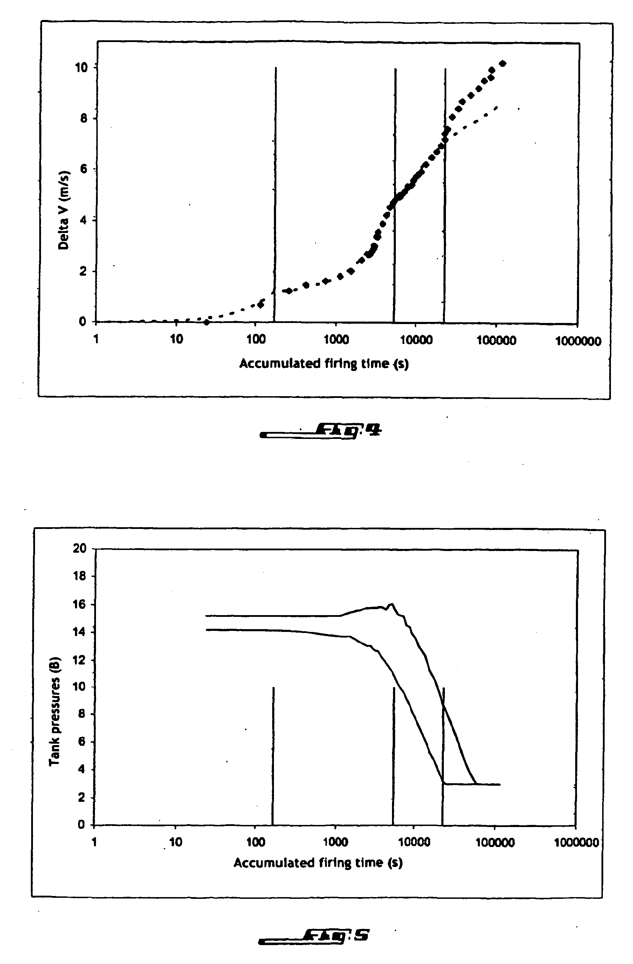

Figure 4 shows the cumulative delta-V (increase of velocity) achieved against the accumulated thrusters firing time (in thrusters seconds). These are shown by the discrete points corresponding to orbit determination by tracking. The four regimes of thrusters operation identified above (chemical reaction, liquid expulsion, cold gas, and propellant vapor) are clearly shown, separated by vertical lines. The dashed line corresponds to a model devised for each of the first three regimes, i.e. the nominal thrust level for the chemical reaction regime, 10% thrust level during the liquid expulsion regime, and a thrust proportional to the square of tank pressure for the cold gas regime. It may also be seen that a significant delta-V is generated in the fourth regime (propellant vapour) which starts at the time of connecting the pipe-work of the redundant thrusters branch to the tanks and continues as the pressure falls to a values below the measurable range i.e. less than 3 bars. There is evidence of recovery of residual propellant in the tanks in this period in addition to the propellant in the redundant branch and that a chemical reaction could have occurred at the thrusters to increase the performance.

Figure 5 shows the fall in the tank pressures during the re-orbiting, with evidence that the first liquid to be depleted is the fuel (the lower curve). Note that 3 bars represent the minimum calibrated value available in telemetry.

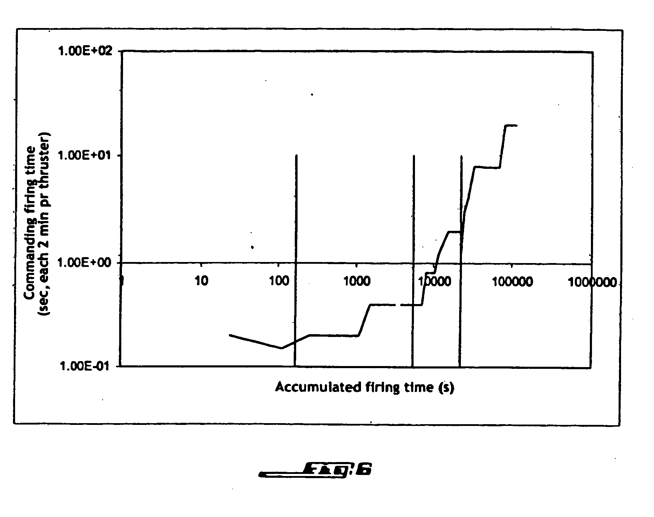

An indication of the pulse durations used is given in Figure 6 (one point is plotted per day). These are the firing times of each of the thrusters every 2 minutes.

Refinements to the satellite control strategy

In order to maximise the rate at which the orbit can be raised it is preferable to command thrusters pulses at an interval which is less than the attitude control loop response time, in order to minimise transients to the attitude and the wheel speed. For this reason we have adapted the strategy to command pulses every 20 seconds instead of every 2 minutes. With this approach the effective thrusters firing duty cycle may be increased by a factor of 4 compared to that used during the EII-F03 re-orbiting.

Orbit control

The invention allows controlling the orbit as planned, i.e. at EOL to increase the semi-major axis with a desired eccentricity. Specifically this involves choosing the arcs of daily pulse, duration and tune the duty cycle depending on the efficiency. The planned orbit needs to be such that the eccentricity is kept at the desired value, which needs to be calculated as function of the effective cross section of the satellite to the sun. The target value needs to consider that this parameter is lower by an approximate factor of 3 once the satellite has been decommissioned as compared to the controlled attitude. The eccentricity is controlled by either increasing or decreasing the perigee (pulsing around the apogee or perigee). The direction of the eccentricity vector is controlled by changing mainly by selecting pulse periods different from perigee or apogee.

It is important to perform at the beginning of the single-liquid phase a characterisation of the pulse efficiency since during this phase, it will remain quite constant. During the cold-gas mode this characterisation needs to be done more frequently since it changes rapidly due to the decrease of the pressures inside the tanks.

On a daily basis, an orbit determination is performed through tracking of the satellite, to assess the result of the efficiency of the manoeuvres and of the orbit raise results. The tracking is composed of either Kuband RG from two alternative sites or S-band RG complemented with pointing measurements as necessary. This combination was selected on a case by case basis to avoid interference with other satellites while the orbit of the satellite increases and thus it is drifting and passing through the longitudes of other transmitting satellites.

The daily orbit determination allows re-adaptation of the daily pulse arcs in a way to favour the perigee or apogee and/or the eccentricity vector. The daily monitor of the thrust efficiency based on the orbit determination allows an increase of the duty cycle to keep a value of the efficiency adapted to the orbit raise needs. The thrust arcs planned in advance need to take into account the gradual reduction of the efficiency till a new update of the duty cycle is performed.

The duration of the operations in this mode can take approximately 1 month. Since the longitude drift increases while pulsing, it is therefore important in this case to ensure that there is enough coverage by the TCR before the visibility of the satellite is lost. This is calculated by propagating the orbit assuming an increasing average drift rate as result of the thrust during the different regimes.

It is important in this method to ensure at the beginning of the re-orbit the satellite does not pose a danger or close approach to other satellites. While at the beginning of operations the distance with respect to the GEO are is low, it is mandatory to consult the international databases to locate the existing satellites and space debris and commence orbital coordination with other operators till the perigee reaches a minimum distance from the control windows.

It is important to decrease the eccentricity at the beginning to ensure safe distance from other satellites and increase it at the end to reach its natural value. This will ensure a constant difference between the apogee and perigee avoiding that the perigee will be too low in a long-term basis.

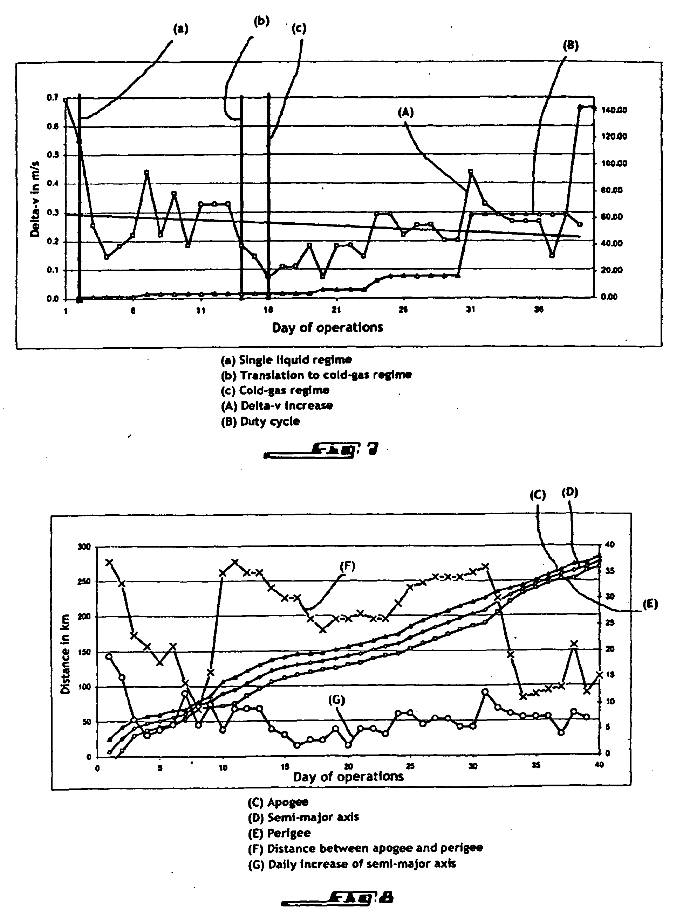

Figure 7 shows the evolution of the orbital parameters: Semi-major axis, perigee and apogee. Additionally it includes the difference between apogee and perigee, which is an indication of the eccentricity evolution and the daily increase of the semi-major axis. The measured values correspond to the dates at which the orbit parameters were measured. The jumps in the semi-major axis increase correspond to various facts:

- The number of pulses that were executed every day was not equal.
- The efficiency of the pulses was not constant.

What is important to note is that thanks to the increase of the duty cycle it was possible to maintain the increase in the semi-major axis although at the end of the operations the pressure inside the tanks was very low.

Figure 8 shows the evolution of the daily increase of the semi-major axis, and the duty cycle. There is an average daily increase of the semi-major axis. The vertical lines indicate the transition phases. As it can be observed, after a few days of each regime transition, the duty cycle was increased after the characterisation of the thrust efficiency.

The transition from the chemical reaction regime of the propulsion system to the different end-of-life regimes happened as follows.

<u>Bubbles regime (transition to single liquid): Day 0 of operations</u>

This phase was characterised as almost nominal from the point of view of efficiency. Since one of the liquids was close to the complete exhaustion, gas bubbles were being ingested gradually, which implied that attitude perturbations were expected. The control of this phase required a close monitoring of the attitude of the satellite and stop of pulsing if necessary, which never took place since the attitude was stable at duty cycles of 200 ms every 2 minutes.

At the end of this phase, the remaining oxidiser liquid in the tanks was approximately 8 kg.

<u>Liquid + gas regime: Starting on day 3 of operations</u>

- During this phase the thrust is composed out of the contribution from single liquid from one tank and gas from the other tank (vapours and pressurant).
- It has been estimated that the pulse efficiency of the phase liquid + gas is 10 times less than the combustion phase. While in combustion regime, the efficiency of the thrust is 0.43E-3 km of semi-major axis increase per milli-second of pulse, in the liquid-gas phase this parameter is reduced to 0.043E-3 km/ms.
- The increase in semi-major axis per millisecond of pulse is 1.52E-6 km/ms, 10 times less than in the combustion regime.
- The following can be achieved in 24 hours of pulsing, which involves 720 pulses (assuming one pulse every two minutes and pulses of 400 ms), the semi-major axis increase is approximately:

```
6.15 E-4 (m/s)/pulse * 720 pulses/Day * 27.4 km/(m/s)
= 12 km/Day,
```

where
6.15 E-4 is the measured achieved dV per pulse (0.064 m/s for 104 pulses) of 400 ms. This value was stable during this phase of the re-orbit operations. At the end of this phase, as the remaining liquid gets exhausted, the efficiency drops, and needs to be compensated by increasing the duty cycle.

This function is proportional to the pulse duration and number of pulses per day.

In case of a sequence initiated at the correct moment of the day (consistent with the targeted eccentricity) it is possible to pulse 24 hours a day with daily orbit determinations to characterise the pulse efficiency and if necessary increase the duty cycle to achieve 12 km/D of increase.

- Depending on the remaining liquid, if the dynamic residuals are large enough it would be possible to reach 250 km of perigee with single liquid in approximately 21 days. In the case of EII-F3, it was possible with 8 kg of single oxidiser liquid (and gas from the other tank) to raise the orbit by 100 km the equivalent of 8 days of 24 hours pulsing.
- The total amount of dV achieved with a single liquid was: 4.6 m/s.
- The above values are average values. EUTELSAT performed different sequences of pulsing in order to tune the values of the eccentricity and increase the efficiency as the gas pressure was decreasing.

Transition to cold-gas regime: Day 14 of operations

This phase is characterised by a strong decrease of efficiency. Some small amounts of single liquid are mixed with evaporated oxidiser. Attitude control becomes unstable and the duty cycle needs to be increased to maintain the pulse efficiency.

Cold-gas regime: Starting on day 16 of operations

This phase is characterised by a decreasing pulse efficiency. As the pressure in the tanks drops with the exhaustion of the remaining gas, it is necessary to increase the duty cycle to keep the efficiency constant. During this regime it is more difficult to control the eccentricity of the orbit, since the efficiency decreases permanently. Adjustments of efficiency are necessary almost every day.

The total dV achieved in cold-gas mode was: 5.3 m/s. This quantity can change depending on the dynamic residuals.

End of operations: Day 30

The pressure in the tanks is very low due to the low tank pressures and the consequently reduced flow of gas while the thrusters are open. The remaining pressure does not provide any significant thrust and the duty cycle is increased to very large values to empty and passivate the tanks following the international recommendations. Final pressures were less than one bar in the tanks.

It is important to note from the above description that the method of the invention is applicable to all types of satellites where a chemical reaction takes place to produce a thrust. The amount of residuals will determine the total possible dV that can be achieved. For bi-propellant systems the dynamic residuals will determine the duration of the liquid phase. The larger the dynamic residuals, the more dV and distance can be obtained in this phase. The cold-gas phase depends less on the dynamic residuals since it is composed from oxidiser and fuel vapours and pressurants. This phase will be more repetitive for all satellites.

In case that a satellite has a mono-propellant subsystem, the expected behavior is the same except that the phases are reduced to bubbles transition from liquid to gas and cold-gas regime.

**Claims**

1. Method of operating a geostationary satellite with propulsion subsystems using chemical reaction of a mono-propellant or a bi-propellant system to perform thrust, by bringing the satellite at the end of its lifetime, i.e. in the absence of chemical reaction, to a disposal orbit by providing thrust through initially very small but frequent thruster firings allowing the residuals of the mono-propellant or bi-propellant to be set free in a controlled manner,
**characterized by** increasing the on time of the thruster firings in three subsequent steps, the first increase being done when the propulsion subsystems have entered a regime of liquid expulsion, the second increase being done when no more propellant is delivered in liquid form, and the third increase being done when the propellant tank pressure reduces.

2. Method according to claim 1, **characterized by** commanding pulses of the propulsion subsystem at an interval which is less than an attitude control loop response time.

3. Method according to claim 1 or 2, **characterized by** performing, right after the propulsion subsystems have entered a regime of liquid expulsion, a characterization of the pulse efficiency.

4. Method according to one of claims 1 to 3, **characterized by** performing, when no more liquid propellant is delivered from one tank, frequently a characterization of the pulse efficiency.

5. Method according to one of claims 1 to 4, to perform and complete the reorbit of a satellite, while starting after the bubbles transition, **characterized by** performing the passivation of the propellant subsystem.

6. Method according to one of claims 1 to 5, in order to permit a satellite operator to disregard propellant counting methods to decide the start of reorbit operations, **characterized by** performing the passivation of the propellant subsystem.

7. Method according to one of claims 1 to 6, **characterized by** *defining* three propulsion regimes and correspondent transitions and operating and reorbiting a satellite while in each of these regimes and transitions, and performing therefore :

   • for defining a first regime: starting once one liquid is below a certain limit, and bubbles of gas enter the thrusters during the combustion, determine the attitude transients, which are controlled by using other attitude control equipments on-board the satellites;
   • for defining a second regime: determine the start of liquid expulsion in case of bi-propellant system, in which liquid only will be expelled i.e. oxidiser or fuel, depending on the mixture ratio or dynamic residuals;
   • for defining a third regime: once all liquid has been expelled, determine the start of expelling only gas, mostly pressurant, through the thrusters;
   • for defining the transition from two-liquid operation to single-liquid operation: determine the beginning of ingestion of gas bubbles in one of the tanks;
   • for defining the transition from single-liquid operation to gas-gas operation: determine the beginning of strong decrease of pulse efficiency.

8. Method according to claim 7, **characterized by** controlling the three propulsion regimes and the transitions between said regimes.

9. Method according to one of claims 7 or 8, **characterized by** performing a characterization of the efficiency through the measurement through orbit determination of the daily semi-major axis increase per each pulse during the said regimes and transitions.

10. Method according to claim 9, **characterized by** modulating the said on-times during the three main said phases and transitions, based on daily assessment of the impulse delivered by the on-times such that the impulse provided allows to provide an almost constant daily orbit raise while controlling the attitude of the satellite.

11. Method according to one of claims 1 to 10, **characterized by** interactively controlling the eccentricity of the orbit to achieve a long-term disposal orbit in line with the cross section to mass ratio of a tumbling satellite, the eccentricity of such an orbit being iteratively controlled by selecting the periods of the day of pulsing based on the assessment of the impulses of each on-time during the different reorbit phases.

**Patentansprüche**

1. Verfahren zum Betreiben eines geostationären Satelliten mit Antriebsteilsystemen, die eine chemische Reaktion eines Einfach- oder Zweifach-Treibstoffsystems verwenden, um den Schub auszuführen, indem der Satellit am Ende seiner Lebensdauer, d.h. wenn keine chemische Reaktion mehr vorliegt, auf eine Entsorgungsumlaufbahn gebracht wird, indem Schub durch anfänglich sehr kleine aber häufige Triebwerkzündungen bereitgestellt wird, die es ermöglichen, die Rückstände des Einfach- oder Zweifachtreibstoffs auf geregelte Art und Weise freizusetzen, **gekennzeichnet durch** das Erhöhen der Einschaltdauer der Triebwerkzündungen in drei aufeinander folgenden Schritten, wobei die erste Erhöhung erfolgt, wenn die Antriebsteilsysteme in einen Betriebszustand der Flüssigkeitsaustreibung gegangen sind, wobei die zweite Erhöhung erfolgt, wenn kein Treibstoff mehr in flüssiger Form abgegeben wird, und wobei die dritte Erhöhung erfolgt, wenn der Druck im Treibstofftank sinkt.

2. Verfahren nach Anspruch 1, **gekennzeichnet durch** das Steuern von Impulsen des Antriebsteilsystems in einem Zeitabstand, der kürzer ist als eine Ansprechzeit des Fluglage-Regelkreises.

3. Verfahren nach Anspruch 1 oder 2, **gekennzeichnet durch** das Ausführen einer Charakterisierung des Impulswirkungsgrads, sofort nachdem die Antriebsteilsysteme in den Betriebszustand der Flüssigkeitsaustreibung übergegangen sind.

4. Verfahren nach einem der Ansprüche 1 bis 3, **gekennzeichnet durch** das häufige Ausführen einer Charakterisierung des Impulswirkungsgrads, wenn kein flüssiger Treibstoff mehr aus einem Tank abgegeben wird.

5. Verfahren nach einem der Ansprüche 1 bis 4, um das Schicken eines Satelliten auf eine neue Umlaufbahn während des Startens nach dem Übergangs auf eine Blasenströmung auszuführen und zu beenden, **gekennzeichnet durch** das Ausführen der Passivierung des Treibstoffteilsystems.

6. Verfahren nach einem der Ansprüche 1 bis 5, um es einem Satellitenbetreiber zu erlauben, Treibstoffzählverfahren zu ignorieren, um über den Beginn der Vorgänge zum Schicken auf eine neue Umlaufbahn zu entscheiden, **gekennzeichnet durch** das Ausführen der Passivierung des Treibstoffteilsystems.

7. Verfahren nach einem der Ansprüche 1 bis 6, **gekennzeichnet durch** das Definieren von drei Antriebsbetriebszuständen und entsprechenden Übergängen und das Betreiben und auf eine neue Umlaufbahn Schicken eines Satelliten, während er sich in jedem dieser Betriebszustände und Übergänge befindet, und zu diesem Zweck das Ausführen der folgenden Schritte:

   - zum Definieren eines ersten Betriebszustands: Starten, wenn eine Flüssigkeit sich unterhalb einer bestimmten Grenze befindet und Gasblasen während der Verbrennung in die Triebwerke eindringen, Bestimmen der Einschwingvorgänge der Fluglage, die unter Verwendung anderer Fluglage-Steuergeräte an Bord der Satelliten gesteuert werden;
   - zum Definieren eines zweiten Betriebszustands: Bestimmen des Beginns der Flüssigkeitsaustreibung bei einem Zweifachtreibstoffsystem, bei dem nur Flüssigkeit, d.h. Oxidator oder Brennstoff, je nach dem Mischverhältnis oder den dynamischen Rückständen, ausgetrieben wird;
   - zum Definieren eines dritten Betriebszustands: wenn die gesamte Flüssigkeit ausgetrieben wurde, Bestimmen des Beginns des Austreibens nur von Gas, hauptsächlich Druckgas, **durch** die Triebwerke;
   - zum Definieren des Übergangs vom Betrieb mit zwei Flüssigkeiten zum Betrieb mit einer Flüssigkeit: Bestimmen des Beginns der Aufnahme von Gasblasen in einem der Tanks;
   - zum Definieren des Übergangs vom Betrieb mit einer Flüssigkeit zum Gas-Gas-Betrieb: Bestimmen des Beginns einer starken Verminderung des Impulswirkungsgrads.

8. Verfahren nach Anspruch 7, **gekennzeichnet durch** das Steuern der drei Antriebsbetriebszustände und der Übergänge zwischen den Betriebszuständen.

**9.** Verfahren nach einem der Ansprüche 7 oder 8, **gekennzeichnet durch** das Ausführen einer Charakterisierung des Wirkungsgrads **durch** die Messung anhand einer Umlaufbahnbestimmung der täglichen Zunahme der großen Halbachse pro Impuls während der Betriebszustände und Übergänge.

**10.** Verfahren nach Anspruch 9, **gekennzeichnet durch** das Modulieren der Einschaltdauern während der drei Hauptphasen und Übergänge auf der Basis einer täglichen Bewertung des Impulses, der von den Einschaltdauern abgegeben wird, so dass es der bereitgestellte Impuls ermöglicht, eine fast konstante tägliche Anhebung der Umlaufbahn bereitzustellen und dabei die Fluglage des Satelliten zu steuern.

**11.** Verfahren nach einem der Ansprüche 1 bis 10, **gekennzeichnet durch** das interaktive Steuern der Exzentrizität der Umlaufbahn, um eine langfristige Entsorgungsumlaufbahn zu erreichen, die dem Verhältnis zwischen Querschnitt und Masse eines Taumelsatelliten entspricht, wobei die Exzentrizität einer derartigen Umlaufbahn iterativ gesteuert wird, indem die Tageszeiten des Impulsgebens gewählt werden auf der Basis der Auswertung der Impulse jeder Einschaltdauer während der verschiedenen Phasen des Schickens auf eine andere Umlaufbahn.

## Revendications

**1.** Procédé d'exploitation d'un satellite géostationnaire avec des sous-systèmes de propulsion utilisant une réaction chimique d'un système à monergol ou diergol pour effectuer une poussée, en amenant le satellite à la fin de sa vie utile, c'est-à-dire en l'absence de toute réaction chimique, à une orbite de dégagement en fournissant une poussée à travers des allumages de propulseur initialement très faibles mais fréquents, permettant de libérer les résidus du monergol ou diergol de manière contrôlée,
**caractérisé par** l'étape consistant à augmenter le temps d'activation des allumages de propulseur en trois étapes successives, la première augmentation étant réalisée quand les sous-systèmes de propulsion sont entrés dans un régime d'expulsion de liquide, la deuxième augmentation étant réalisée quand plus aucun ergol n'est fourni sous forme liquide, et la troisième augmentation étant réalisée quand la pression du réservoir d'ergol diminue.

**2.** Procédé selon la revendication 1, **caractérisé par** l'étape consistant à commander des impulsions du sous-système de propulsion à un intervalle qui est inférieur à un temps de réponse de boucle de commande de stabilisation.

**3.** Procédé selon la revendication 1 ou 2, **caractérisé par** l'étape consistant à effectuer, immédiatement après que les sous-systèmes de propulsion sont entrés dans un régime d'expulsion de liquide, une caractérisation du rendement d'impulsion.

**4.** Procédé selon l'une quelconque des revendications 1 à 3, **caractérisé par** l'étape consistant à effectuer des caractérisations fréquentes du rendement d'impulsion quand plus aucun ergol liquide n'est fourni à partir d'un réservoir.

**5.** Procédé selon l'une quelconque des revendications 1 à 4, pour effectuer et achever la remise en orbite d'un satellite pendant un démarrage après la transition à l'écoulement à bulles, **caractérisé par** l'étape consistant à effectuer la passivation du sous-système d'ergol.

**6.** Procédé selon l'une quelconque des revendications 1 à 5, afin de permettre à un opérateur de satellite d'ignorer les procédés de comptage d'ergol pour décider du démarrage des opérations de remise en orbite, **caractérisé par** l'étape consistant à effectuer la passivation du sous-système d'ergol.

**7.** Procédé selon l'une quelconque des revendications 1 à 6, **caractérisé par** les étapes consistant à définir trois régimes de propulsion et des transitions correspondantes, et exploiter et remettre en orbite un satellite pendant qu'il se trouve dans chacun de ces régimes et chacune de ces transitions, et effectuer à cet effet les étapes suivantes :

- pour définir un premier régime : démarrer dès qu'un liquide se trouve sous une certaine limite et des bulles de gaz entrent dans les propulseurs pendant la combustion, déterminer les transitoires de stabilisation, qui sont commandées en utilisant d'autres équipements de commande de stabilisation à bord des satellites ;
- pour définir un deuxième régime : déterminer le début de l'expulsion de liquide en cas de système diergol, dans lequel seul du liquide, c'est-à-dire de l'oxydant ou du combustible, sera expulsé, en fonction du rapport de mélange ou des résidus dynamiques ;
- pour définir un troisième régime : dès que tout le liquide a été expulsé, déterminer le début de l'expulsion de gaz seulement, surtout du gaz sous pression, à travers les propulseurs ;

- pour définir la transition d'un fonctionnement à deux liquides à un fonctionnement à un seul liquide : déterminer le début de l'ingestion de bulles de gaz dans l'un des réservoirs ;
- pour définir la transition du fonctionnement à un seul liquide à un fonctionnement gaz/gaz : déterminer le début d'une forte diminution du rendement d'impulsion.

8. Procédé selon la revendication 7, **caractérisé par** l'étape consistant à commander les trois régimes de propulsion et les transitions entre lesdits régimes.

9. Procédé selon l'une quelconque des revendications 7 ou 8, **caractérisé par** l'étape consistant à effectuer une caractérisation du rendement par la mesure à travers une détermination d'orbite de l'augmentation quotidienne du demi grand axe à chaque impulsion pendant lesdits régimes et lesdites transitions.

10. Procédé selon la revendication 9, **caractérisé par** l'étape consistant à moduler lesdits temps d'activation pendant lesdites trois phases et transitions principales, sur la base d'une évaluation quotidienne de l'impulsion fournie par les temps d'activation de sorte que l'impulsion fournie permet de fournir un relèvement d'orbite quotidien presque constant tout en commandant la stabilisation du satellite.

11. Procédé selon l'une quelconque des revendications 1 à 10, **caractérisé en** commandant de façon interactive l'excentricité de l'orbite afin d'atteindre une orbite de dégagement à long terme correspondant au rapport entre la section transversale et la masse d'un satellite en culbutage, l'excentricité d'une telle orbite étant commandée de façon itérative en sélectionnant les périodes de la journée d'émission d'impulsions sur la base de l'évaluation des impulsions de chaque temps d'activation pendant les différentes phases de remise en orbite.

Fig. 1

Suspend Firings & Change Regime

Wheel Speed

Max

Min

Time

_Fig. 2_

Commands to satellite

Thruster firing scheduler

Checks on attitude & wheels

Ground Control Computers

_Fig. 3_

_Fig. 4_

_Fig. 5_

*Fig. 6*

(a) Single liquid regime
(b) Translation to cold-gas regime
(c) Cold-gas regime
(A) Delta-v increase
(B) Duty cycle

**FIG. 7**

(C) Apogee
(D) Semi-major axis
(E) Perigee
(F) Distance between apogee and perigee
(G) Daily increase of semi-major axis

**FIG. 8**

**EP 1 852 350 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6024328 A